# EUROPEAN PATENT APPLICATION

(11) **EP 4 177 843 A1**
(43) Date of publication of application: **10.05.2023**
(21) Application number: 21206838.1
(22) Date of filing: 08.11.2021
(51) Int. Cl.: G06T 15/08

(54) **IMAGE PROCESSING DEVICE, MEDICAL IMAGING SYSTEM AND COMPUTER PROGRAM ELEMENT**

(71) Applicant: Koninklijke Philips N.V., 5656 AG Eindhoven (NL)
(72) Inventor: WIEMKER, Rafael, Eindhoven (NL); BONTUS, Claas, Eindhoven (NL); NICKISCH, Hannes, Eindhoven (NL); PETERS, Jochen, Eindhoven (NL); SCHMITT, Holger, Eindhoven (NL)
(74) Representative: Philips Intellectual Property & Standards

(57) **Abstract**

The invention relates to an image processing device (3) comprising a data input unit (5) and a processing unit (6). The data input unit (5) is adapted for receiving volumetric medical image data (9) organized in voxels. The processing unit (6) is adapted to perform an automatic anatomical shape model segmentation (10) on the volumetric medical image data (9), yielding a mesh model. Further, the processing unit (6) performs a determination (11) of a region of interest (21) based on the mesh model and a mesh refinement (12) of the region of interest (21). The processing unit (6) also performs a projection (15) of the region of interest (21), yielding two-dimensional medical data, and a generation of a graphical representation (16) based on the two-dimensional medical data. The invention further relates to a medical imaging system (1) comprising an image processing device (3) and to a computer program element.

## Description

### FIELD OF THE INVENTION

The invention relates to an image processing device, to a medical imaging system and to a computer program element.

### BACKGROUND OF THE INVENTION

An application of volumetric medical images that have been obtained from, e.g., computed tomography, magnetic resonance imaging or ultrasound, is the detection of perfusion deficits, in particular of the heart. A preferred method for obtaining the volumetric medical images is spectral computed tomography because of its superior contrast agent sensitivity, which makes it beneficial for functional assessment of the heart muscle and its feeding coronary arteries.

Perfusion deficits, e.g., in a myocardial wall, can be recognized by various functional measures, e.g., transmural differences or ratios, or simply by comparatively low Hounsfield densities after administration of a contrast agent in computed tomography, by low iodine density values in spectral computed tomography, low gadolinium enhancement in magnetic resonance imaging, etc.

However, some locations may easily be overlooked, since the perfusion defects can be spatially and dynamically subtle, and are closely surrounded by other contrast-enhanced structures and possible image artifacts.

Also, standard overview projections such as global mean- or minimum-intensity-projections fail to be useful, because of too many surrounding anatomical structures with a much higher dynamic range than subtle density differences caused by cardiac perfusion deficits.

Furthermore, even small imperfections in the delineation of the region of interest may lead to erroneous false positive or false negatives cues.

### SUMMARY OF THE INVENTION

It is an object of the present invention to provide an image processing device that provides an improved graphical representation of volumetric medical image data. It is a further object of the present invention to provide a medical imaging system with said image processing device and a computer program element that performs the image processing of said image processing device.

The object of the present invention is solved by the subject-matter of the independent claims, wherein further embodiments are incorporated in the dependent claims.

In an aspect of the present invention, an image processing device is provided. The image processing device comprises and a processing unit.

The data input unit is configured for receiving volumetric medical image data organized in voxels. Said volumetric medical image data may have been obtained by a variety of three-dimensional medical imaging methods. The data input unit may be a network connection unit that is adapted to receive the volumetric medical image data from a medical imaging device. Alternatively, the data input unit may be a physical or virtual interface for transferring volumetric medical image data from a generating unit that generated said volumetric medical image data from raw sensor data to the processing unit.

The processing unit receives the volumetric medical image data from the data input unit and is adapted to perform the following steps on the received volumetric medical image data. These steps may all be performed on one processor but may also be distributed over several processors.

First, an automatic anatomical shape model segmentation is performed. This yields a mesh model of the anatomical structures that are present in the volumetric medical image data. As an intermediate step in determining the mesh model, a labeling of the anatomical structures that are present within the volumetric medical image data and/or a semantic segmentation may be performed. Based on said labeling for every voxel of the volumetric medical image data, surfaces that separate different anatomical structures from one another are detected and said surfaces are converted into a mesh. The automatic anatomical shape model segmentation may be performed by a trained machine learning system such as a deep neural network or a decision tree. The anatomical shape model segmentation may be used to further improve the visualization of the volumetric medical image data by masking irrelevant anatomical structures and/or occlusions, hence reducing anatomical clutter.

Based on the mesh model, a determination of a region of interest is performed. In particular, the region of interest is a predetermined anatomical region that is selected based on the anatomical structures indicated by the mesh model. The region of interest is represented by a mesh surrounding said region of interest.

Further, a mesh refinement of the region of interest is performed. That is, the shape of the mesh surrounding the region of interest is improved. Such a refinement may reduce false positives and/or false negatives that may arise from even minor delineation imperfections of the mesh surrounding the region of interest. Hence, by performing the mesh refinement of the region of interest, a robustness against imperfections of the initial delineation of the region of interest is achieved.

The refined mesh surrounding the region of interest is then used to perform a projection of the region of interest, yielding two-dimensional medical data. Said projection is in particular a projection of the region of interest onto a two-dimensional manifold. As an example, local perfusion measures within the region of interest are projected onto the two-dimensional manifold. The region of interest may be a layer of an anatomical structure such that the mesh surrounding the region of interest has an inner surface and an outer surface. Then, the projection may be performed by establishing a local normal direction of the layer. This may be done by identifying for each mesh vertex on the inner surface a predetermined number of nearest vertices on the outer surface and computing the centroid of said nearest vertices. The local normal direction is then given by the vector from the mesh vertex on the inner surface to the corresponding centroid of the nearest vertices on the outer surface. The nearest vertices on the outer surface may be identified, for example, by a previously established k-dimensional tree.

Based on the two-dimensional medical data, a graphical representation is generated. The two-dimensional medical data may be mapped to a gray-level scale or to a pseudo-color scale, wherein the different gray-levels or pseudo-colors represent different values of the two-dimensional medical data. Since the mesh refinement has provided a robust region of interest, the projected two-dimensional medical data is robust and hence the graphical representation provides a robust view of the region of interest. In particular, the graphical representation may convey visual cues of anomalies or defects, in particular perfusion anomalies or perfusion defects, in the region of interest. Changes in the region of interest, in particular by the mesh refinement, and/or in the projection, e.g., by using a different functional measure for the projection, may be instantaneously and consistently updated in the graphical representation.

According to an embodiment, the volumetric medical image data is computed tomography data, in particular spectral computed tomography data, magnetic resonance data and/or ultrasound data. In particular, any volumetric medical imaging method for which perfusion manifests itself by virtue of contrast agent uptake may be used. Contrast agent uptake in perfused tissue can serve as a surrogate for perfusion, even though small tissue-embedded vessels have calibers below a spatial resolution limit of the medical imaging system. A preferable volumetric medical image data is spectral computed tomography (spectral CT) data, since spectral CT features superior contrast agent sensitivity, and is thus beneficial for functional assessment of the perfused tissue.

According to an embodiment, the volumetric medical image data comprises at least a part of an organ, in particular an organ where perfusion in certain layers, particularly outer layers, is of special interest. Such an organ may be a heart, a liver, a kidney, a mamma, a lung or a brain. For the heart, as an example, the region of interest may be a myocardial wall, e.g., of the left ventricle.

According to an embodiment, the region of interest is a trans-mural layer of the organ. Said trans-mural layer may be a myocardial wall, in particular between an endo-cardiac wall and an epi-cardiac wall. Perfusion in this region of interest is of particular medical relevance and the robust method performed by the processing unit generates a graphical representation that helps detecting anomalies or defects in the perfusion.

According to an embodiment, the projection is an average intensity projection, in particular a median intensity projection or a mean intensity projection. Alternatively, the projection is a minimum intensity projection which is particularly sensitive to under-perfusion defects but also to delineation imperfections. Hence, the minimum intensity projection benefits greatly from the mesh refinement of the region of interest. Also, a user may switch between different projections, e.g., between an average intensity projection and a minimum intensity projection, wherein the graphical representation is updated immediately.

According to an embodiment, the mesh refinement is an interactive mesh refinement, i.e., a mesh refinement based on user input. An example for such an interactive mesh refinement is a global three-dimensional erosion of the region of interest. Said global three-dimensional erosion may be performed by moving the outer surface of the region of interest closer to the inner surface of the region of interest, by moving the inner surface of the region of interest closer to the outer surface of the region of interest, or by moving both the outer surface and the inner surface of the region of interest closer to one another. In either case, the graphical representation is updated immediately reflecting the changes made to the region of interest.

According to an embodiment, the mesh refinement is an automatic mesh refinement. Said automatic mesh refinement may be based on a local variance. As an example, a locally weighted variance image V is computed for the whole image volume or for the region of interest by applying a standard Gaussian filter G to the image intensities I and the squared image intensities I²: V = G * I² - (G * I)². Then, an upper threshold is determined for the local variances, e.g., an adjustable number or a predetermined number times a median local variance for the whole region of interest. Further, a medial mesh surface is constructed between the inner surface and the outer surface. Starting from each medial mesh vertex, a tentative vertex is shifted along the local normal direction until either the current inner surface or outer surface is reached, or the upper threshold is surpassed, generating vertices of the refined mesh. As this refinement of the mesh surrounding the region of interest is carried out using local variances and mesh vertex displacements, the computation is efficient enough to allow a generation of the graphical representation in interactive time.

According to an embodiment, the processing unit is further adapted to perform a dynamic level adjustment of a scale used for the display of the two-dimensional medical data. With said dynamic level adjustment, the graphical representation is adjusted to yield an optimal contrast for a pre-defined rendering window. The window of the so-call window function may be set to a certain fixed relative narrow value such that small changes in density, which are a surrogate for the perfusion, may be appraised. A level value may be set to the mean or the median of all values sampled within the region of interest, such that under- and over-perfusion are manifested in the graphical representation in an optimal way.

According to an embodiment, the graphical representation comprises a two-dimensional mapping based on the two-dimensional medical data. Said two-dimensional mapping is obtained by warping the two-dimensional medical data to atlas-conforming two-dimensional mappings. This may be performed using standard medical atlases such as the 17-segment model (AHA segments, yielding the bull's eye view) or other known map projections, such as the conformal Mercartor projection or the area-true Mollweide or Hammer projections. Said two-dimensional mapping may serve as an overview image for the region of interest. Also, the graphical representation may comprise two or more two-dimensional mappings, in particular with different map projections.

According to an embodiment, the graphical representation comprises a three-dimensional visualization of the two-dimensional medical data. In particular, said three-dimensional visualization is a mesh representation of the region of interest, decorated with a texture mapping corresponding to the two-dimensional medical data. The mesh representation may correspond to the outer surface or the inner surface of the mesh surrounding the region of interest or to a medial surface located between the outer surface and the inner surface. The texture mapping may be identical to the two-dimensional mapping. Such a mesh representation may be computed fast enough to allow for a smooth non-lagging user interaction, since texture mapping is intrinsically embedded in many browsers and portable or non-portable computing devices. The three-dimensional visualization allows an intuitive spatial understanding of presence and distribution of possible anomalies or defects, in particular perfusion anomalies and defects, and allows interactive rotation, panning and zooming for visual inspection from all sides. Particularly, the graphical representation may comprise at least one two-dimensional mapping and at least one three-dimensional visualization such that the advantages of both representations may be used to assess anomalies or defects, in particular perfusion anomalies or defects.

According to an embodiment, the image processing device further comprises a user input unit adapted to receive user input on any part of the graphical representation. The processing unit is adapted to adjust the graphical representation in dependence on the user input, so that all parts of the graphical representation are kept in a consistent state. One such user input may be an input for the interactive mesh refinement, e.g., the amount of the global three-dimensional erosion. Another such user input may be an input for a parameter for the automatic mesh refinement. Yet another such user input may be an input for a parameter for the dynamic level adjustment. Further, a user input may indicate a location in any of the parts of the graphical representation. In this case, the spatial location corresponding to the user input may be indicated on all parts of the graphical representation and, in particular, in a three-dimensional representation of the volumetric medical image data. Also, the location input by the user may be used to center some or all parts of the graphical representation around that location.

Yet another such input may be made in particular on a combined graphical representation of the perfusion and vessels, e.g., vasculature, particularly coronaries, feeding the perfused tissue. There, a point on a vessel may be selected by the user. Starting from the selected point on the vessel, all vessel points downstream, including branches, from the selected point are identified and based on said vessel points, a feeding territory, i.e., an area of the tissue that is supported through the selected point on the vessel, is determined. Said feeding territory is then indicated on some, preferably all, parts of the graphical representation. The indication may be made by using a different pseudo-color scale for the feeding territory, e.g., highlighted with respect to the original pseudo-color scale, or by rendering a boundary of the feeding territory, e.g., using a pre-defined line style.

In another aspect of the present invention, a medical imaging system, in particular a spectral computed tomography system, is provided. Said medical imaging system comprises an image processing device according to the above description. In particular, the medical imaging system is adapted to provide a robust graphical representation of a region of interest of volumetric medical image data that makes it easy to assess anomalies or defects, in particular perfusion anomalies or defects. Further advantages are given in the above description.

In yet another aspect of the present invention, a computer program element is provided. The computer program element, when executed by at least one processing unit, is adapted to cause the processing unit to perform an automatic anatomical shape model segmentation on volumetric medical image data, yielding a mesh model, and a determination of a region of interest based on the mesh model. The computer program element is further adapted to perform a mesh refinement of the region of interest, a projection of the region of interest, yielding two-dimensional medical data, and a generation of a graphical representation based on the two-dimensional medical data. Using said graphical representation, it is easy to assess anomalies or defects, in particular perfusion anomalies or defects. Further advantages are given in the above description.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Fig 1 shows a schematic overview of an embodiment of a medical imaging system;
Fig. 2 shows a flowchart of an embodiment of an image processing method;
Fig. 3 shows a volumetric medical image of a heart; and
Fig. 4 shows a volumetric medical image of a heart along with a graphical representation of a region of interest.

### DETAILED DESCRIPTION OF EMBODIMENTS

Like numbered elements in these figures are either equivalent elements or perform the same function. Elements which have been discussed previously will not necessarily be discussed in later figures if the function is equivalent.

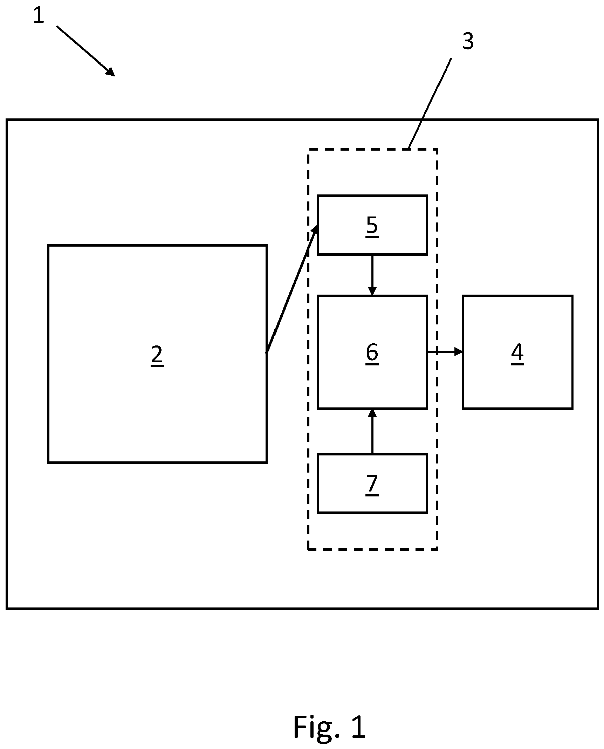

Fig. 1 shows a schematic overview of an embodiment of a medical imaging system 1. The medical imaging system 1 comprises a medical imaging device 2, an image processing device 3 and a display 4. The medical imaging device 2 is adapted to generate volumetric medical image data organized in voxels and may be a computed tomography (CT) device, a spectral CT device, a magnetic resonance imaging device or an ultrasound device. The volumetric medical image data is then received by a data input unit 5 of the image processing device 3. The data input unit 5 is adapted to transfer the received volumetric medical image data to a processing unit 6 of the image processing device 3. The processing unit 6 also receives user input via a user input unit 7 and generates a graphical representation of the volumetric medical image data which is then displayed on the display 4.

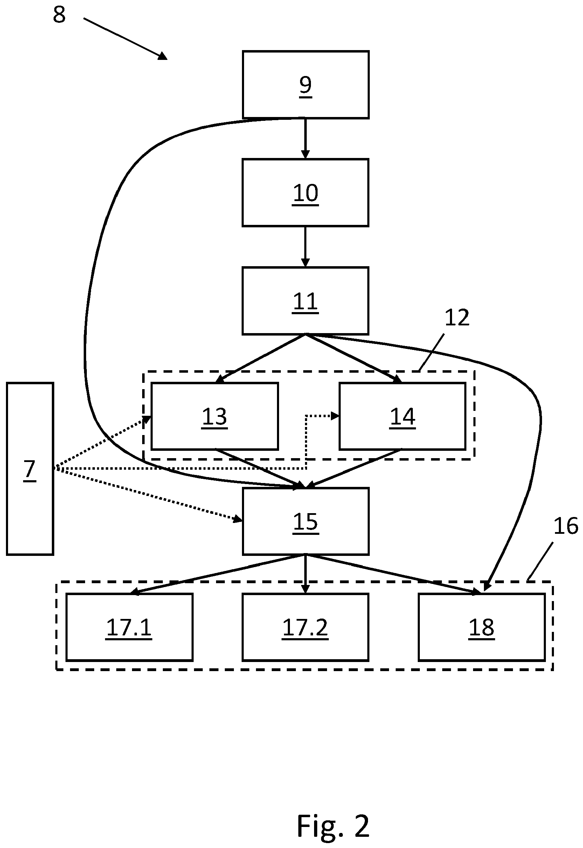

The processing unit 6 is adapted to perform the method 8 shown in Fig. 2. Said method 8 starts with the volumetric medical image data 9 of the medical imaging device 2. An automatic anatomical shape model segmentation 10 is performed on the volumetric medical image data 9, yielding a mesh model of anatomical structures within the volumetric medical image data 9. Anatomical structures of particular interest may be a heart, a liver, a kidney, a mamma, a lung or a brain.

Based on said mesh model, a determination 11 of a region of interest is performed. Said region of interest may be a trans-mural layer of an organ. For the heart, the trans-mural layer may be located between an endo-cardiac wall and an epi-cardiac wall.

Then, a mesh refinement 12 of the region of interest is performed to exclude regions within the region of interest that may lead to false positives or false negatives. Said mesh refinement 12 may be performed as an interactive mesh refinement 13, e.g., as a global three-dimensional erosion of the region of interest. The parameters of the interactive mesh refinement 13 may be input by a user via the user input unit 7. Alternatively, an automatic mesh refinement 14 may be performed, in particular based on a local variance. Like for the interactive mesh refinement 13, parameters of the automatic mesh refinement 14 may be input by a user via the user input unit 7. It is also possible that both an interactive mesh refinement 13 and an automatic mesh refinement 14 is performed.

Using the refined mesh, a projection 15 of the volumetric medical image data within the region of interest is performed, yielding two-dimensional medical data, pertaining, e.g., to perfusion within the region of interest. Parameters for said projection 15 may also be input by the user via the user input unit 7.

Finally, a graphical representation 16 is generated based on the two-dimensional medical data that was generated by the projection 15. In this embodiment of the method 8, the graphical representation 16 comprises two two-dimensional mappings 17.1 and 17.2, wherein the two-dimensional mapping 17.1 may be a mapping to the 17-segment model (the so-called AHA segments, or bull's eye view) and the two-dimensional mapping 17.2 may be a mapping to a world map, such as a Mercator projection, a Mollweide projection or a Hammer projection. The graphical representation 16 further comprises a three-dimensional visualization 18 of the two-dimensional medical data, which is the mesh representation of the region of interest, decorated with a texture mapping corresponding to the two-dimensional medical data. In the current embodiment, the original mesh representation is used, but also the refined mesh representation may be used.

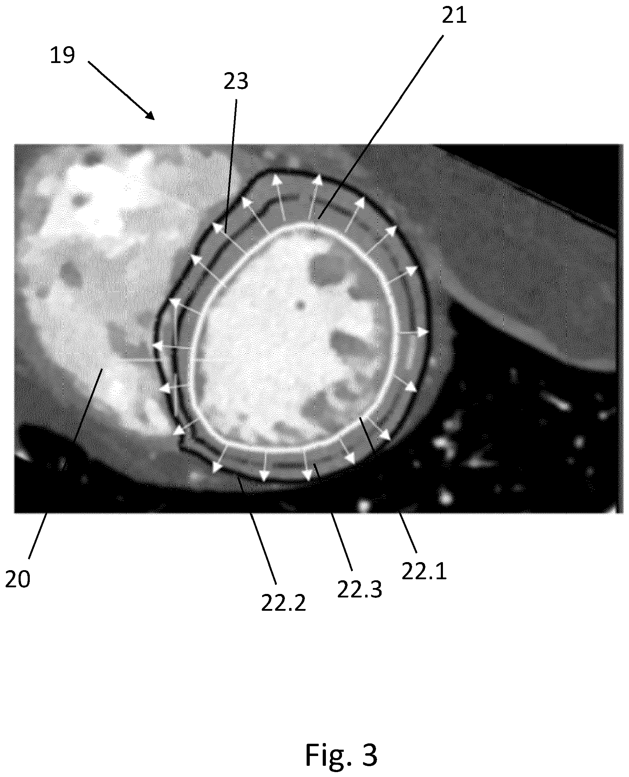

Fig. 3 shows a cross-section through a volumetric medical image 19 of a heart 20. A region of interest 21 is delimited by an inner surface 22.1 and an outer surface 22.2. The surfaces 22 have a triangular mesh structure that appears as a line in the cross-section. Starting from a medial mesh surface 22.3, an automatic mesh refinement 14 has been performed to reduce false positives and/or false negatives that may arise from even minor delineation imperfections of the mesh 22.1 and 22.2 surrounding the region of interest 21. Also shown is the local normal direction 23 for a plurality of mesh vertices, along which the projection 15 is performed.

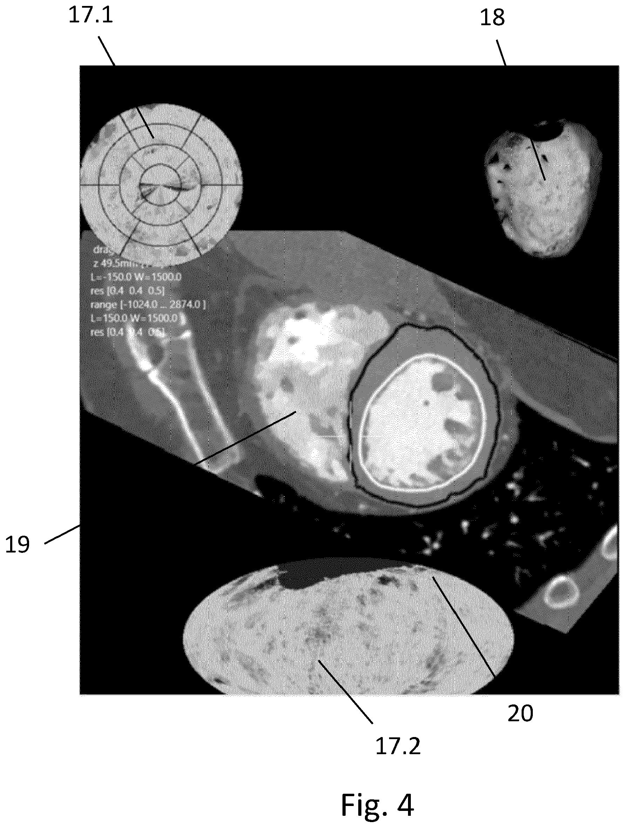

Finally, Fig. 4 shows a cross-section through the volumetric medical image 19 of the heart 20 along with graphical representations 16 of the region of interest 21: the two-dimensional mapping 17.1 is the mapping to the 17-segment model, displayed in the bull's eye view. The two-dimensional mapping 17.2 is the mapping to a world map, wherein the area-true Mollweide projection has been used. The three-dimensional visualization 18 uses the mesh of the outer surface 22.2 and texture information from the two-dimensional medical data to show a three-dimensional view of the surface of the heart 20, colored according to the perfusion in the region of interest 21. This combined view provides a plethora of information such that even small anomalies and/or defects in the perfusion of the region of interest 21 may be found.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS:

- 1: medical imaging system
- 2: medical imaging device
- 3: image processing device
- 4: display
- 5: data input unit
- 6: processing unit
- 7: user input unit
- 8: method
- 9: volumetric medical image data
- 10: automatic anatomical shape model segmentation
- 11: determination
- 12: mesh refinement
- 13: interactive mesh refinement
- 14: automatic mesh refinement
- 15: projection
- 16: graphical representation
- 17: two-dimensional mapping
- 18: three-dimensional visualization
- 19: volumetric medical image
- 20: heart
- 21: region of interest
- 22.1: inner surface
- 22.2: outer surface
- 22.3: medial mesh surface
- 23: local normal direction

## Claims

1. An image processing device comprising:
a data input unit (5) for receiving volumetric medical image data (9) organized in voxels;
a processing unit (6) adapted to perform on the volumetric medical image data (9):
an automatic anatomical shape model segmentation (10) yielding a mesh model;
a determination (11) of a region of interest (21) based on the mesh model;
a mesh refinement (12) of the region of interest (21);
a projection (15) of the region of interest (21), yielding two-dimensional medical data; and
a generation of a graphical representation (16) based on the two-dimensional medical data.

2. The image processing device according to claim 1, wherein the volumetric medical image data (9) is computed tomography data, in particular spectral computed tomography data, magnetic resonance data and/or ultrasound data.

3. The image processing device according to claim 1 or 2, wherein the volumetric medical image data (9) comprises at least a part of an organ, in particular a heart (20), a liver, a kidney, a mamma, a lung or a brain.

4. The image processing device according to claim 3, wherein the region of interest (21) is a trans-mural layer of the organ, in particular between an endo-cardiac wall and an epi-cardiac wall.

5. The image processing device according to any of claims 1 to 4, wherein the projection (15) is an average intensity projection, in particular a median intensity projection or a mean intensity projection, or a minimum intensity projection.

6. The image processing device according to any of claims 1 to 5, wherein the mesh refinement (12) is an interactive mesh refinement (13), in particular a global three-dimensional erosion of the region of interest (21).

7. The image processing device according to any of claims 1 to 6, wherein the mesh refinement (12) is an automatic mesh refinement (14), in particular based on a local variance.

8. The image processing device according to any of claims 1 to 7, wherein the processing unit (6) is further adapted to perform a dynamic level adjustment of a scale used for the display of the two-dimensional medical data.

9. The image processing device according to any of claims 1 to 8, wherein the graphical representation (16) comprises a two-dimensional mapping (17) based on the two-dimensional medical data.

10. The image processing device according to any of claims 1 to 9, wherein the graphical representation (16) comprises a three-dimensional visualization (18) of the two-dimensional medical data, in particular a mesh representation of the region of interest (21), decorated with a texture mapping corresponding to the two-dimensional medical data.

11. The image processing device according to any of claims 1 to 10, wherein the image processing device (3) further comprises a user input unit (7) adapted to receive user input on any part of the graphical representation (16), and the processing unit (6) is adapted to adjust the graphical representation (16) in dependence on the user input, so that all parts of the graphical representation (16) are kept in a consistent state, and in particular a spatial location corresponding to the user input is indicated.

12. A medical imaging system, in particular a spectral computed tomography system, comprising an image processing device (3) according to any of claims 1 to 11.

13. A computer program element, which, when executed by at least one processing unit (6) is adapted to cause the processing unit (6) to perform on volumetric medical image data (9):
an automatic anatomical shape model segmentation (10) yielding a mesh model;
a determination (11) of a region of interest (21) based on the mesh model;
a mesh refinement (12) of the region of interest (21);
a projection (15) of the region of interest (21), yielding two-dimensional medical data; and
a generation of a graphical representation (16) based on the two-dimensional medical data.
